# EUROPÄISCHE PATENTSCHRIFT

(11) **EP 0 771 696 B1**
(45) Veröffentlichungstag und Bekanntmachung des Hinweises auf die Patenterteilung: **24.05.2000**
(21) Anmeldenummer: 96117220.2
(22) Anmeldetag: 26.10.1996
(51) Int. Cl.: B60R 21/20, F16B 21/07

(54) **Mittel zur Befestigung eines Airbag-Moduls**
Air bag module fastening means
Dispositif de fixation d'un module de sac gonflable

(30) Priorität: 04.11.1995 DE 19541180
(43) Veröffentlichungstag der Anmeldung: 07.05.1997
(73) Patentinhaber: MST Automotive GmbH Automobil-Sicherheitstechnik, 63743 Aschaffenburg (DE)
(72) Erfinder: Fleckenstein, Jupp, 63856 Bessenbach (DE); Hirzmann, Guido, D-53579 Erpel (DE)
(74) Vertreter: Degwert, Hartmut, Dipl.-Phys.

(56) Entgegenhaltungen:
- EP-A- 0 328 759
- FR-A- 2 090 860
- FR-A- 2 266 815
- GB-A- 851 722
- US-A- 2 420 061
- US-A- 5 380 037
- RESEARCH DISCLOSURE, Nr. 368, 1.Dezember 1994, EMSWORTH, GB, Seite 667 XP000497304 "SELF-LOCKING MECHANISM FOR DSIR AND STEERING WHEEL ATTACHMENT"

## Beschreibung

Die Erfindung betrifft Mittel zur lösbaren, formschlüssigen Befestigung der Gehäuserückwand eines Airbag-Moduls an einem Trägerbauteil einer Kraftfahrzeugkarosserie gemäß dem Oberbegriff des Anspruchs 1.

Zur Schaffung einer formschlüssigen Verbindung zwischen einem im Frontteil, vorzugsweise auf dem Lenkrad oder in einer entsprechend gestalteten Öffnung der Armaturentafel angeordneten Airbag-Modul und einer dieses Airbag-Modul aufnehmenden Trägerstruktur werden üblicherweise Schrauben verwendet, mit denen das Airbag-Modul von der Rückseite her über den Generatorträger mit der Trägerkonstruktion verbunden wird. Die Herstellung einer solchen Schraubverbindung ist mit einem erheblichen Montageaufwand verbunden.

Um diesen Montageaufwand zu reduzieren, ist in der US-A-5 333 897 ein Airbag-Modul mit mehreren auf der Rückseite angebrachten Stiften vorgesehen, die durch eine entsprechende Öffnung einer Trägerplatte gesteckt werden und die jeweils ein Klippelement aufweisen, das nach dem Durchstecken an der Rückseite der Trägerplatte formschlüssig anliegt. Das Klippelement besteht aus einem elastischen Werkstoff und ist mit einem einer Vorspannung bewirkenden Element verbunden, durch das ein Ausrasten des Klippelements aus der Trägerplatte verhindert wird. Der Nachteil einer solchen Verbindung zwischen einem Airbag-Modul und der Trägerplatte ist darin zu sehen, daß das Klippelement aus vielen Einzelteilen besteht, die überwiegend relativ kompliziert gestaltet sind und mit engen Fertigungstoleranzen hergestellt werden müssen, wenn sie den Anforderungen der Serienfertigung genügen sollen. Einzelne Elemente sind darüber hinaus noch bruchanfällig, so daß auch die Betriebssicherheit nicht in ausreichendem Umfang gewährleistet werden kann. Insgesamt wird die bekannte Befestigungsmethode als zu aufwendig angesehen.

Aus der US-A-5 380 037 sind gattungsgemäße Mittel zur Befestigung der Gehäuserückwand eines Airbag-Moduls an einem Trägerbauteil einer Kraftfahrzeugkarosserie bekannt, bei denen die Befestigungsbolzen gegen die Kraft der Rückhalteelemente eine bestimmte Strecke in axialer Richtung zur Betätigung der Hupe des Fahrzeugs beweglich sind.

Es besteht die Aufgabe, die zwischen einem Airbag-Modul und einer Trägerkonstruktion erforderliche, formschlüssige Verbindung so zu gestalten, daß man einerseits auf das lästige Verschrauben verzichten kann, ohne andererseits auf teure Sonderanfertigung von Klippelementen angewiesen zu sein. Die Verbindung von Airbag-Modul und Trägerstruktur soll möglich einfach und schnell durchführbar und bei einer notwendigen Demontage ebenso einfach und schnell wieder lösbar sein.

Zur Lösung dieser Aufgabe ist bei den Mitteln der eingangs genannten Gattung erfindungsgemäß vorgesehen, daß das Rastelement am Trägerbauteil durch wenigstens eine Feder in Raststellung vorgespannt ist und mittels eines Werkzeuges aus der Raststellung in die Öffnungsstellung vorspannbar ist, wobei das Rastelement unter dem Einfluß des Rückstellelementes aus dem Rasteingriff ausrastet.

Der Erfindung liegt die Erkenntnis zugrunde, daß man eine Klippverbindung zwischen einem Airbag-Modul und einer Trägerstruktur wesentlich einfacher und kostengünstiger als bei der US-A-5 333 897 bekannten Vorschlag gestalten kann, wenn man vom Bolzen unabhängige Rastelemente vorsieht. Dadurch kann der Bolzen als einfaches rotationssymmetrisches und deswegen preisgünstig herstellbares Bauelement ausgeführt werden. Auch die Rastelemente selbst sind unkompliziert und ohne übermäßig hohe Anforderungen an die Fertigungsgenauigkeit herstellbar.

Bei einer zweckmäßigen Ausführungsform ist vorgesehen, daß das Rastelement aus einem zangenartig einander gegenüberliegenden Paar von Rasthaken besteht, die abgeschrägte Eingriffskanten aufweisen und quer zur Bolzenlängsachse durch Federn in die Schließstellung vorgespannt und mittels eines Werkzeuges in die Öffnungsstellung vorspannbar sind und daß der Bolzen ein gegenüber seinem Schaft stufenartig verbreitertes, endseitig konisch verjüngtes Vorderteil aufweist, wobei die Rasthaken beim Einschieben des Bolzens in die Aufnahmeöffnung durch das Zusammenwirken des konisch verjüngten Vorderteils und der abgeschrägten Eingriffskanten in die Öffnungsstellung vorspannbar ist und der Durchmessersprung zwischen Vorderteil und Bolzenschaft den Rasteingriff bildet, in den die Rasthaken einrasten, wenn der Bolzen die vorgegebene Befestigungsposition erreicht hat.

Das in Längsrichtung des Bolzens wirkende Rückstellelement kann entweder aus einer zwischen Gehäusewand und Trägerbauteil wirkenden Feder oder aus einem zwischen Gehäuserückwand und Trägerbauteil angeordneten elastomeren Bauteil bestehen.

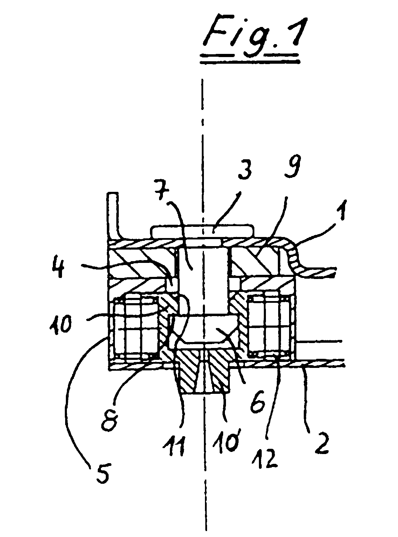

Weitere Einzelheiten des Erfindungsgedankens werden anhand des in der Figur dargestellten Ausführungsbeispiels näher erläutert.

Die Figur zeigt einen Schnitt durch einen Befestigungspunkt für die Montage eines Airbag-Moduls an einem Trägerbauteil einer Kraftfahrzeugkarosserie. Mit der Gehäuserückwand (1) des Airbag-Moduls ist ein Bolzen (3) drehfest verbunden, der einen Schaft (7) und ein stufenartig verbreitertes, endseitig konisch verjüngtes Vorderteil (6) aufweist. Mit dem Trägerbauteil (2) der Kraftfahrzeugkarosserie ist ein Bauteil (5) in Form eines kleinen, kastenförmigen Gehäuses verbunden, in dem ein zangenartig einander gegenüberliegendes Paar von Rasthaken (10) gelagert ist, die abgeschrägte Eingriffskanten (11) aufweisen und quer zur Bolzenlängsachse durch Federn (12) in eine Schließstellung vorgespannt sind. Die Rasthaken (10) weisen eine durch eine Öffnung im Trägerbauteil herausgeführte Verlängerungen (10') auf, zwischen die ein Werkzeug einführbar ist, um die Rasthaken (10) bei der Demontage des Airbag-Moduls in eine Öffnungsstellung vorspannen zu können. Bei der Montage greift der Bolzen (7) mit seinem konisch verjüngten Vorderteil durch die Aufnahmeöffnung (4) des Bauteils (5) hindurch, drückt die Eingriffskanten (11) der Rasthaken (10) gegen die Federn (12) nach außen, bis die dargestellte Endposition erreicht ist, in der die Rasthaken (10) das gegenüber dem Schaft (7) des Bolzens (3) stufenartig verbreiterte Vorderteil (6) hintergreifen. Durch ein zwischen Gehäuserückwand (1) und Trägerbauteil (2) bzw. Bauteil (5) angeordnetes elastomeres Bauteil (9) ist gewährleistet, daß der Bolzen (3) etwas weiter als dargestellt in Längsrichtung nach unten vorschiebbar ist, um einerseits das Einrasten sicherzustellen und andererseits in montiertem Zustand eine Vorspannung in Bolzenlängsrichtung aufrechtzuerhalten. Das Rückstellelement (9) sorgt auch dafür, daß das Airbag-Modul sich auch bei Fahrzeugerschütterungen nicht relativ zur Fahrzeugkarosserie bewegen und ggf. unerwünschte Geräusche verursachen kann.

## Patentansprüche

1. Mittel zur lösbaren, formschlüssigen Befestigung der Gehäuserückwand eines Airbag-Moduls am Trägerbauteil einer Kraftfahrzeugkarosserie, mit mindestens zwei Befestigungspunkten, wobei
- je Befestigungspunkt an der Gehäuserückwand (1) ein Bolzen (3) und am Trägerbauteil (2) eine Aufnahmeöffnung (4) vorgesehen sind,
- im Bereich der Aufnahmeöffnung (4) ein elastisch vorgespanntes Rastelement (10) angeordnet ist,
- der Bolzen (3) ein kegel- oder keilförmiges Vorderteil (6) und am Bolzenschaft (7) einen Rasteingriff (8) aufweist,
- das Rastelement (10) bei der Montage vom Vorderteil (6) des Bolzens (3) quer zur Längsachse des Bolzens (3) aus einer Schließstellung in eine Öffnungsstellung vorgespannt wird, aus der es in eine Raststellung zurückfedert, wobei das Rastelement (10) in den Rasteingriff (7) des Bolzens (3) eingreift, wenn der Bolzen (3) die vorgegebene Befestigungsposition in der Aufnahmeöffnung (4) erreicht hat,
- ein in Richtung der Längsachse des Bolzens (3) wirkendes Rückstellelement (9) vorgesehen ist und der Bolzen (3) unter Kompression des Rückstellelements (9) weiter als bis zur vorgegebenen Befestigungsposition in die Aufnahmeöffnung (4) einschiebbar ist und nach dem Rückfedern des Rastelements (10) in die Raststellung vom Rückstellelement (9) unter Aufrechterhaltung einer Vorspannung zwischen Gehäuserückwand (1) und Trägerbauteil (2) bis in die vorgegebene Befestigungsposition rückschiebbar ist, und
- der Bolzen (3) drehfest und nach außen vorstehend mit der Gehäusewand (1) verbunden ist, dadurch gekennzeichnet, daß das Rastelement (10) am Trägerbauteil (2) durch wenigstens eine Feder (12) in die Schließstellung vorgespannt ist und mittels eines Werkzeuges aus der Raststellung in die Öffnungsstellung vorspannbar ist, wobei das Rastelement (10) unter dem Einfluß des Rückstellelements (9) aus dem Rasteingriff (8) ausrastet.

2. Mittel nach Anspruch 1, dadurch gekennzeichnet, daß das Rastelement aus einem zangenartig einander gegenüberliegenden Paar von Rasthaken (10) besteht, die abgeschrägte Eingriffskanten (11) aufweisen und durch die Federn (12) quer zur Bolzenlängsachse in die Schließstellung vorgespannt sind und daß der Bolzen (3) ein gegenüber seinem Schaft (7) stufenartig verbreitertes, endseitig konisch verjüngtes Vorderteil (6) aufweist, wobei die Rasthaken (10) beim Einschieben des Bolzens (3) in die Aufnahmeöffnung (4) durch das Zusammenwirken des konisch verjüngten Vorderteils (6) und der abgeschrägten Eingriffskanten (11) in die Öffnungsstellung vorspannbar sind und der Durchmessersprung zwischen Vorderteil (6) und Bolzenschaft (7) den Rasteingriff (8) bildet, in den die Rasthaken (10) einrasten, wenn der Bolzen (3) die vorgegebene Befestigungsposition erreicht hat.

3. Mittel nach Anspruch 1 oder 2, dadurch gekennzeichnet, daß das Rückstellelement (9) aus einer zwischen Gehäusewand (1) und Trägerbauteil (2) in Längsrichtung des Bolzens (3) wirkenden Feder besteht.

4. Mittel nach Anspruch 1 oder 2, dadurch gekennzeichnet, daß das Rückstellelement (9) aus einem zwischen Gehäuserückwand (1) und Trägerbauteil (2) angeordneten elastomeren Bauteil besteht.

5. Mittel nach einem der vorstehenden Ansprüche, jedoch mit der Maßgabe, daß der Bolzen (3) am Trägerbauteil (2) und die Aufnahmeöffnung (4) an der Gehäuserückwand (1) vorgesehen sind.

## Claims

1. A means for the releasable, positive fastening of the back wall of the housing of an airbag module to the supporting component of a motor vehicle body, having at least two fastening points, in which
- for each fastening point a pin (3) is provided on the back wall (1) of the housing and a receiving opening (4) is provided on the supporting component (2),
- a resiliently biased catch member (10) is disposed in the area of the receiving opening (4),
- the pin (3) has a conical or wedge-shaped front portion (6) and a detent (8) on the pin shaft (7),
- during assembly, the catch member (10) is biased by the front portion (6) of the pin (3) transversely to the longitudinal axis of the pin (3) from a closed position into an open position from which it springs back into a catching position, the catch member (10) engaging into the detent (7) of the pin (3) when the pin (3) has reached the predetermined fastening position in the receiving opening (4),
- a return element (9) is provided which acts in the direction of the longitudinal axis of the pin (3), and the pin (3) can be inserted into the receiving opening (4) beyond the predetermined fastening position with a compression of the return element (9) and, after the catch member (10) has sprung back into the catching position, can be shifted back by the return element (9) as far as to the predetermined fastening position while maintaining a bias between the back wall (1) of the housing and the supporting component (2), and
- the pin (3) is connected non-rotationally and outwardly protruding to the housing wall (1), characterized in that the catch member (10) on the supporting component (2) is biased into the closed position by at least one spring (12) and can be biased out of the catching position into the open position by means of a tool, the catch member (10) disengaging from the detent (8) under the influence of the return element (9).

2. The means according to claim 1, characterized in that the catch member consists of a pair of detent hooks (10) arranged opposite each other in the manner of pincers, which have bevelled engaging edges (11) and are biased into the closed position by the springs (12) transversely to the longitudinal axis of the pin, and that the pin (3) has a front portion (6) which is broadened in the form of a step as compared to its shaft (7) and tapers conically at its end, the detent hooks (10) being able to be biased into the open position by the cooperation of the conically tapered front portion (6) and the bevelled engaging edges (11) when the pin (3) is inserted into the receiving opening (4), and the abrupt decrease in diameter between the front portion (6) and the pin shaft (7) forming the detent (8) into which the detent hooks (10) snap when the pin (3) has reached the predetermined fastening position.

3. The means according to claim 1 or 2, characterized in that the return element (9) consists of a spring acting between the housing wall (1) and the supporting component (2) in the longitudinal direction of the pin (3).

4. The means according to claim 1 or 2, characterized in that the return element (9) consists of an elastomeric component disposed between the back wall (1) of the housing and the supporting component (2).

5. The means according to any of the preceding claims, but with the proviso that the pin (3) is provided on the supporting component (2) and the receiving opening (4) is provided on the back wall (1) of the housing.

## Revendications

1. Moyen de fixation amovible et à engagement positif de la paroi arrière du carter d'un module de coussin gonflable sur l'élément de support du châssis d'un véhicule automobile, avec au moins deux points de fixation, dans lequel
- pour chaque point de fixation sur la paroi arrière (1) du carter, un boulon (3) et un orifice de logement (4) sur l'élément de support (2) sont prévus,
- un élément d'arrêt (10) élastiquement précontraint est disposé dans la zone de l'orifice de logement (4),
- le boulon (3) présente une partie avant (6) en forme de cône ou de coin et, sur la tige (7) du boulon, un cran d'arrêt (8),
- l'élément d'arrêt (10), lors du montage, est précontraint par la partie avant (6) du boulon (3) transversalement à l'axe longitudinal du boulon (3) à partir de la position de fermeture en une position d'ouverture, de laquelle il revient élastiquement en une position d'arrêt, l'élément d'arrêt (10) s'engageant dans le cran d'arrêt (7) du boulon (3) quand le boulon (3) a atteint la position de fixation prédéfinie dans l'orifice de logement (4),
- un élément de rappel (9) agissant en direction de l'axe longitudinal du boulon (3) est prévu et le boulon (3), par compression de l'élément de rappel (9), peut coulisser dans l'orifice de logement (4) au-delà de la position de fixation prédéfinie et, après le retour élastique de l'élément d'arrêt (10), est retourné en coulissant dans la position prédéfinie par l'élément de rappel avec maintien de la contrainte entre la paroi arrière du carter (1) et l'élément de support (2),
- le boulon (3) est assemblé avec la paroi du carter solidaire en rotation en faisant saillie vers l'extérieur, caractérisé en ce que l'élément d'arrêt (10) est précontraint sur l'élément de support (2) par au moins un ressort (12) dans la position de fermeture et qu'au moyen d'un outil, ledit élément d'arrêt (10) est contraignable de la position d'engagement en la position d'ouverture, l'élément d'arrêt (10) se désengageant alors du cran d'arrêt (8) sous l'influence de l'élément de rappel (9).

2. Moyen selon la revendication 1, caractérisé en ce que l'élément de support consiste en un couple de crochets d'arrêt (10) se faisant face à la manière d'une pince, présentant des arêtes (11) d'engagement en biseau et qui sont précontraintes en position de fermeture transversalement à l'axe longitudinal du boulon par les ressorts (12) et en ce que le boulon (3) présente, par rapport à sa tige (7), une partie avant (6) s'étendant en gradin et se rétrécissant coniquement en son extrémité, les crochets d'arrêt (10) pouvant être précontraints en position d'ouverture lors du coulissement du boulon (3) dans l'orifice de logement (4) par l'action commune de la partie avant (6), se rétrécissant coniquement, et des arêtes (11) d'engagement en biseau, et la discontinuité de diamètre entre la partie avant (6) et la tige du boulon (7) formant le cran d'arrêt (8) dans lequel les crochets d'arrêt (10) s'engagent lorsque le boulon (3) a atteint la position de fixation prédéterminée.

3. Moyen selon la revendication 1 ou 2 , caractérisé en ce que l'élément de rappel (9) consiste en un ressort agissant entre la paroi du carter (1) et l'élément de support (2) dans la direction longitudinale du boulon (3).

4. Moyen selon la revendication 1 ou 2 , caractérisé en ce que l'élément de rappel (9) consiste en un élément élastomère disposé entre la paroi arrière du carter (1) et l'élément de support (2).

5. Moyen selon l'une des revendications précédentes, toutefois sous réserve que le boulon (3) et l'orifice de logement (4) sont respectivement prévus sur l'élément de support (2) et sur la paroi arrière du carter (1).
